# DEMANDE DE BREVET EUROPEEN

(11) **EP 2 194 489 A1**
(43) Date de publication de la demande: **09.06.2010**
(21) Numéro de dépôt: 08020862.2
(22) Date de dépôt: 02.12.2008
(51) Int. Cl.: G06K 19/077, G06F 3/044

(54) **Carte électronique ayant des moyens de commande**

(71) Demandeur: EM Microelectronic-Marin SA, 2074 Marin (CH)
(72) Inventeur: Hamm, Alain, 2523 Lignières (CH); Grosjacques, Emile, 2072 Saint-Blaise (CH); Vige, Fabrizio, 2074 Marin (CH); Fabrizio, Jerôme, 2000 Neuchâtel (CH)
(74) Mandataire: Rossand, Isabelle

(57) **Abrégé**

La carte électronique (1) comprend au moins un circuit intégré (5) disposé sur une plaque à circuit imprimé (2), une source d'alimentation électrique (4) reliée à la plaque à circuit imprimé pour alimenter ledit circuit intégré, et des moyens de commande (6) actionnables manuellement et reliés au circuit intégré. Le circuit intégré est prévu pour le traitement des signaux générés par les moyens de commande. Ledit circuit intégré, les moyens de commande et la source d'alimentation sont enfermés dans au moins une couche d'un matériau isolant (3) formant ladite carte. Les moyens de commande sont constitués d'un ensemble d'électrodes pour définir un écran tactile à touches capacitives activables chacune au moyen d'un doigt (D) d'un utilisateur ou d'un stylet posé sur une surface de contact (20) de la carte en regard d'au moins une touche tactile pour l'introduction d'une donnée ou d'une commande. Un écran de blindage (12) est prévu d'un côté des électrodes des touches capacitives (6), qui est opposé à la surface de contact.

## Description

L'invention concerne une carte électronique, telle qu'une carte à puce, qui comprend des moyens de commande intégrés. La carte électronique comprend au moins un circuit intégré disposé sur une plaque à circuit imprimé, une source d'alimentation électrique reliée à la plaque à circuit imprimé pour alimenter ledit circuit intégré, et des moyens de commande actionnables manuellement et reliés au circuit intégré. Ledit circuit intégré est prévu principalement pour le traitement des signaux générés par les moyens de commande. Le circuit intégré, les moyens de commande et la source d'alimentation sont enfermés ou encapsulés dans au moins une couche d'un matériau isolant formant ladite carte.

Une carte électronique munie de tous les composants électroniques peut être de forme générale rectangulaire. Cependant, cette carte électronique peut aussi être d'un autre profil, par exemple de forme générale circulaire. Cette carte électronique, telle qu'une carte à puce, doit être d'une faible épaisseur, par exemple inférieure à 2 mm, et de préférence voisine de 0.8 mm. Une telle carte électronique peut être conventionnellement une carte du type bancaire notamment selon la norme ISO, mais également une carte sous la forme d'un dispositif électronique désigné Token en terminologie anglaise, Un tel dispositif électronique peut être de deux types à savoir un premier type avec une base de temps précise intégrée, ou un second type, qui ne requiert pas une base de temps précise.

Dans l'état de la technique, une telle carte électronique peut comprendre intégrés dans un matériau isolant, une pile ou batterie, au moins un circuit intégré, un dispositif d'affichage d'une information et des moyens de commande reliés au circuit intégré, ainsi qu'un élément sous la forme d'interrupteur actionnable par l'utilisateur. Pour intégrer ces divers éléments dans une carte, il est généralement prévu de les associer sous la forme d'au moins un module électronique comprenant une plaque à circuit imprimé. Les divers éléments électroniques, tels que le circuit intégré, le dispositif d'affichage, la pile ou batterie d'alimentation et les moyens de commande sont agencés en partie sur la plaque à circuit imprimé. L'interrupteur actionnable peut être manuellement activé par l'utilisateur notamment pour la mise en fonction des moyens de commande et/ou du dispositif d'affichage.

Les moyens de commande généralement utilisés pour l'exécution d'au moins une fonction ou l'introduction de données ou de commandes, sont réalisés sous la forme de boutons-poussoirs définissant des portions de dôme sur la surface extérieure de la carte. Avec un tel agencement, il est très difficile de réduire de manière significative l'épaisseur de ladite carte électronique, qui comprend plusieurs composants électroniques. Ceci constitue un inconvénient majeur, car cela ne permet pas de réaliser notamment une carte du type bancaire notamment selon la norme ISO. De plus, de tels moyens de commande ne permettent pas d'assurer une bonne fiabilité dans le temps pour l'exécution de fonctions ou de commandes spécifiques, ce qui constitue un autre inconvénient.

L'invention a donc pour but de fournir une carte électronique qui comprend des moyens de commande pour exécuter certaines fonctions ou pour l'introduction d'au moins une donnée ou commande, tout en ayant une faible épaisseur et garantissant une bonne fiabilité de fonctionnement pour pallier aux inconvénients de l'état de la technique cités ci-devant.

A cet effet, l'invention concerne une carte électronique citée ci-devant, qui comprend les caractéristiques telles que définies dans la revendication indépendante 1.

Des formes d'exécution particulières de la carte électronique sont définies dans les revendications dépendantes 2 à 13.

Un avantage de la carte électronique selon l'invention réside dans le fait que les moyens de commande sous la forme d'électrodes des touches capacitives, occupent une place relativement limitée dans la carte électronique. Grâce à cela, il est possible de réduire au maximum l'épaisseur d'une telle carte électronique comme requis.

Avantageusement, la distance entre une surface de contact de la carte électronique et les touches capacitives est inférieure à l'épaisseur du matériau isolant disposé d'un côté opposé à la surface de contact sur les touches tactiles. Ceci permet au circuit intégré de ne détecter la présence d'un doigt ou d'un stylet qu'en contact sur la surface de contact en regard d'au moins une des touches tactiles à activer, notamment lorsque la carte est maintenue dans la main.

Un écran conducteur de blindage peut avantageusement être disposé dans ou sur la carte électronique. Cet écran de blindage est disposé d'un côté des électrodes des touches capacitives, qui est opposé à la surface de contact. Cet écran conducteur est distant et sans contact avec les touches capacitives. Il peut être relié à une des bornes de la source d'alimentation.

Les buts, avantages et caractéristiques de la carte électronique apparaîtront mieux dans la description suivante de manière non limitative d'au moins une forme d'exécution illustrée par les dessins sur lesquels:
la figure 1A représente une vue en coupe transversale d'une première forme d'exécution de la carte électronique selon l'invention,
la figure 1B représente une vue partielle de dessus montrant l'agencement des électrodes des touches capacitives reliées au circuit intégré sur la plaque à circuit imprimé de la carte électronique selon l'invention,
la figure 2 représente une vue en coupe transversale d'une seconde forme d'exécution de la carte électronique selon l'invention,
la figure 3 représente une vue en coupe transversale d'une troisième forme d'exécution de la carte électronique selon l'invention, et
la figure 4 représente une vue en coupe transversale d'une quatrième forme d'exécution de la carte électronique selon l'invention.

Dans la description suivante, toutes les parties de la carte électronique, qui peut être de préférence une carte à puce, qui sont bien connues d'un homme du métier dans ce domaine technique, ne sont relatées que de manière simplifiée.

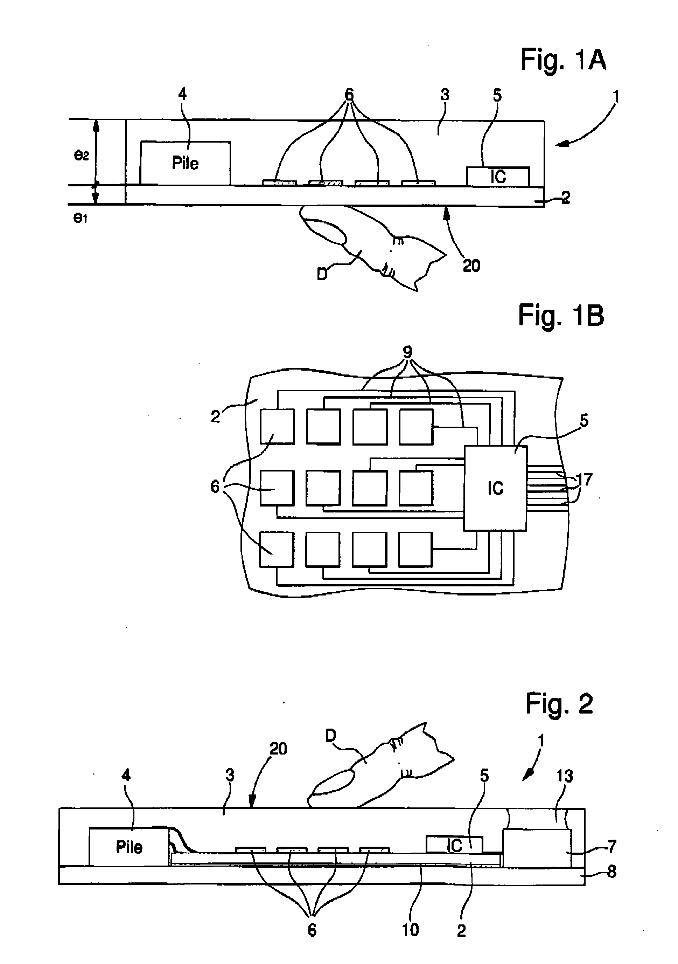

La figure 1A représente une coupe transversale simplifiée d'une première forme d'exécution d'une carte électronique 1, qui peut être de préférence une carte à puce, telle qu'une carte bancaire selon la norme ISO. Dans cette figure 1A et les suivantes, les dimensions des différentes parties de la carte électronique ne sont pas illustrées de manière exacte, mais uniquement pour mieux visualiser toutes les parties qui composent ladite carte électronique. Il doit aussi être compris que la carte électronique peut être également configurée sous la forme d'un badge électronique ou d'un dispositif électronique désigné Token en terminologie anglaise.

Dans cette première forme d'exécution, la carte électronique 1 comprend au moins un circuit intégré 5 disposé sur une plaque à circuit imprimé 2, une source d'alimentation électrique 4, telle qu'une pile ou batterie, reliée à la plaque à circuit imprimé pour alimenter ledit circuit intégré, et des moyens de commande 6 actionnables manuellement. Ces moyens de commande sont reliés au circuit intégré pour qu'une unité de traitement du circuit puisse traiter les signaux générés par les moyens de commande. Le circuit intégré, les moyens de commande et la source d'alimentation, qui sont disposés sur la plaque à circuit imprimé simple face, sont enfermés ou encapsulés dans au moins une couche d'un matériau isolant 3, tel que du plastique.

Dans cette première forme d'exécution, la couche en matériau isolant est fixée directement sur la plaque à circuit imprimé, qui peut être flexible, par exemple réalisée en polyimide. Lors de la fabrication de ladite carte électronique 1, la couche en matériau isolant 3 est amenée sous forme de résine sur une face portant les éléments électroniques de la plaque à circuit imprimé 2. Cette résine peut être du polyuréthane. Après une opération de laminage et de solidification bien connue de cette résine, la carte électronique avec les éléments électroniques intégrés est ainsi réalisée avec une faible épaisseur inférieure à 2 mm, et de préférence proche de 0.76 mm, voire inférieure.

Les moyens de commande sont avantageusement constitués par un ensemble d'électrodes 6, qui définissent un écran tactile à touches capacitives. Ces électrodes 6 sont réalisées dans un matériau conducteur, tel que du Cuivre. Une surface de contact 20 est définie sur une face extérieure de la plaque à circuit imprimé 2. Un doigt D ou un stylet peut être placé en contact de cette surface de contact au-dessus d'au moins une touche capacitive 6 afin de l'activer et ainsi permettre l'exécution d'une fonction spécifique ou l'introduction d'une donnée ou commande.

Comme montré sur la figure 1B, toutes les électrodes 6, qui sont dimensionnées en fonction de la surface approximative de contact d'un doigt sur la surface de contact, et suffisamment espacées l'une de l'autre, sont reliées chacune au circuit intégré par un fil métallique respectif 9. D'autres fils métalliques 17 peuvent être prévus pour relier le circuit intégré à un dispositif d'affichage expliqué ci-après en référence aux figures 2 à 4. Des plages de contact du circuit intégré 5 peuvent être connectées sur la plaque à circuit imprimé 2 notamment par une technique dénommée Flip chip en terminologie anglaise. Il peut être prévu 12 électrodes de touches capacitives agencées comme les touches d'un clavier de téléphone traditionnel pour définir des chiffres, des lettres ou des symboles. Dans un mode de fonctionnement normal, une seule touche capacitive pour chaque action du doigt D d'un utilisateur ne peut être activée et détectée par le circuit intégré. Toutefois il peut être concevable que deux touches adjacentes ou plus puissent être activées en même temps dans le cas d'une configuration du circuit intégré pour définir un curseur informatique.

Comme cette carte électronique 1 peut facilement être tenue dans la main pour actionner les touches capacitives, il est prévu que l'unité de traitement soit configurée pour tenir compte de la distance séparant le doigt D en contact de la surface de contact et la touche capacitive à activer. Pour ce faire, il est nécessaire que la distance e1 entre ladite surface de contact 20 et les touches capacitives 6 soit inférieure à l'épaisseur e2 de la couche en matériau isolant 3, qui est disposée d'un côté opposé à ladite surface de contact par rapport aux touches capacitives 6. Ceci permet en fonction d'un seuil de détection déterminé dans l'unité de traitement du circuit intégré 5, que ladite unité de traitement détecte uniquement la présence d'un doigt D en contact sur la surface de contact en regard d'au moins une des touches tactiles à activer.

Généralement, l'épaisseur e2 de cette couche en matériau isolant 3 vue à la figure 1A, peut être par exemple de l'ordre de 0.45 à 0.5 mm, alors que l'épaisseur e1 de la plaque à circuit imprimé 2 peut être par exemple de l'ordre de 0.1 à 0.15 mm. De ce fait, si la constante diélectrique de la couche en matériau isolant 3, est sensiblement équivalente à celle de la plaque à circuit imprimé 2, le circuit intégré 5 peut être configuré pour ne détecter qu'une action d'un doigt D d'un utilisateur sur la surface de contact 20. Bien entendu dans le cas où la constante diélectrique de la plaque à circuit imprimé, est plus grande que celle de la couche en matériau isolant 3, la différence d'épaisseur peut ne plus être essentielle pour détecter une action d'un doigt uniquement sur la surface de contact.

L'unité de traitement du circuit intégré 5 comprend généralement un multiplexeur, à l'entrée duquel sont connectées toutes les touches capacitives 6, un bloc analogique à oscillateur et un bloc logique de mesure et de comparaison. Le bloc analogique peut comprendre un oscillateur commandé en tension, qui est connecté à la sortie du multiplexeur. Dans une phase initiale de configuration, la multiplexeur a pour tâche de connecter successivement et périodiquement chaque touche tactile à l'entrée de l'oscillateur en fonction de mots binaires de commande fournis par le bloc logique de mesure et de comparaison.

Comme l'oscillateur peut être un oscillateur du type RC, la valeur capacitive de chaque touche capacitive branchée à l'oscillateur va servir à déterminer une fréquence d'oscillation. Cette fréquence est proportionnelle à l'inverse de la valeur de la capacité totale. Ainsi, sans l'action d'un doigt sur la surface de contact 20 en regard d'une touche capacitive 6 branchée à l'oscillateur, la fréquence de l'oscillateur n'est déterminée qu'en fonction de la valeur capacitive d'un condensateur parasite de chaque touche. Par contre quand un doigt D active une des touches capacitives 6, branchée à oscillateur, la valeur capacitive de cette touche est plus importante que celle uniquement du condensateur parasite. Cela a pour conséquence de diminuer la fréquence de l'oscillateur pour définir un signal de mesure relatif à la valeur capacitive de la touche activée. Une comparaison de ce signal de mesure avec un signal de référence représentatif d'une valeur capacitive de base correspondant à la valeur de la capacité parasite de ladite touche initialement non activée est donc effectuée dans le bloc logique. Une fonction spécifique ou l'introduction d'une donnée ou commande est exécutée si la valeur capacitive de la touche activée est plus grande que sa valeur capacitive de base. Ainsi grâce à l'agencement des touches capacitives décrites, le bloc logique est en mesure de déterminer un certain nombre de positions du doigt sur lesdites touches capacitives, par exemple 12 positions.

Pour des détails techniques complémentaires concernant l'unité de traitement du circuit intégré, le lecteur peut se référer au document de brevet EP 0 838 737 qui est incorporé ici par référence.

Le circuit intégré 5 de la carte électronique 1 peut comprendre en plus de l'unité de traitement des signaux des électrodes des touches capacitives 6, généralement une unité mémoire, non représentée, qui est reliée à une unité à microcontrôleur, non représentée, pour le traitement de données ou commandes reçues de l'unité de traitement. L'unité mémoire peut comprendre une mémoire non volatile du type Flash ou EEPROM pour mémoriser des données personnelles, au moins un code d'identification de la carte à puce et des paramètres de configuration. L'unité mémoire contient également notamment au moins un algorithme de cryptage pour un échange sécurisé avec un appareil de lecture. De plus, il peut être envisagé dans le même circuit intégré, de réaliser un circuit d'entraînement d'un dispositif d'affichage, si la carte électronique comporte également un tel dispositif d'affichage comme décrit ci-après en référence aux figures 2 à 4.

Bien entendu, il peut aussi être envisagé de monter plusieurs circuits intégrés sur la même face de la plaque à circuit imprimé 2. Il peut être prévu un circuit intégré 5 pour traiter les signaux générés par les moyens de commande 6, un circuit intégré pour une unité mémoire, un circuit intégré pour un microcontrôleur relié aux autres circuits intégrés, et éventuellement un circuit d'entraînement spécifique pour la commande d'un dispositif d'affichage, tel qu'un dispositif LCD. Le microcontrôleur défini sous la référence EM 6819 fabriqué par l'entreprise EM Microelectronic-Marin SA en Suisse, peut être utilisé dans la carte électronique.

La carte électronique 1 peut comprendre encore un organe de commande sous la forme d'un bouton interrupteur non représenté. Ce bouton interrupteur bien connu peut être activé depuis l'extérieur de la carte par un utilisateur pendant une durée déterminée par exemple une durée de 5, 10 ou 15 secondes de manière à commander la mise en fonction des moyens de commande par l'intermédiaire du circuit intégré alimenté par la pile 4. Sans action sur les touches capacitives après une durée qui peut être équivalente à celle de la mise en fonction, lesdites touches sont placées dans un mode de repos.

La figure 2 représente une coupe transversale d'une seconde forme d'exécution de la carte électronique 1 selon l'invention. Il est à noter que tous les mêmes éléments de la carte électronique 1 décrits ci-après portent des signes de référence identiques à ceux de la figure 1. De ce fait par simplification, il ne sera pas répété en détail la description de chaque élément pour cette figure 2.

Dans cette seconde forme d'exécution, la plaque à circuit imprimé 2, qui peut être flexible ou rigide, comprend sur une seule face, au moins un circuit intégré 5 et les électrodes des touches capacitives 6 des moyens de commande, reliées au circuit intégré. La source d'alimentation 4, qui est une pile ou batterie, est disposée sur un côté de la plaque à circuit imprimé 2 et reliée à ladite plaque par deux brides métalliques pour alimenter le circuit intégré. Un dispositif d'affichage notamment du type LCD 7 est prévu par exemple sur un côté de la plaque à circuit imprimé. Ce dispositif d'affichage 7 est relié par un ensemble de pistes ou fils métalliques au circuit intégré 5, qui peut comprendre un circuit d'entraînement dudit dispositif d'affichage.

La couche en matériau isolant comprend une première couche isolante 3 et une seconde couche isolante 8, qui peut être d'une épaisseur par exemple comprise entre 0.1 et 0.2 mm. La pile 4, le dispositif d'affichage 7, la plaque à circuit imprimé 2, le circuit intégré 5 et les électrodes des touches capacitives 6 sont encapsulés entre la première et la seconde couches isolantes. L'encapsulation de ces éléments électroniques peut être effectuée en deux étapes avec tout d'abord la réalisation de la seconde couche isolante, suivie par la réalisation de la première couche isolante en même matériau plastique, fixée sur la seconde couche isolante pour enfermer tous les composants électroniques. Toutefois, la première et la seconde couche peuvent aussi être réalisées dans une même étape de fabrication.

Il peut être prévu au-dessus du dispositif d'affichage pour définir un champ de vision dudit dispositif, une ouverture 13 pratiquée dans la première couche isolante 3. Toutefois en lieu et place de l'ouverture, il peut être prévu qu'une portion d'affichage du dispositif d'affichage 7 est visible à travers au moins une partie transparente 13 de la première couche en matériau isolant 3.

Dans cette seconde forme d'exécution, la surface de contact 20 pour activer les touches capacitives se trouve sur la face extérieure de la première couche isolante 3. Dans ce cas, la carte électronique 1 peut comprendre encore un écran conducteur de blindage 10, qui peut être disposé d'un côté des électrodes des touches capacitives 6, qui est opposé à la surface de contact 20. Cet écran conducteur est par exemple fixé sur la seconde face de la plaque à circuit imprimé, qui est opposée à la première face sur laquelle sont réalisées les électrodes des touches capacitives 6.

Cet écran peut être un film conducteur, tel qu'un film métallique en Nickel ou en Cuivre ou un insert métallique, Cet écran de blindage 10 est distant et sans contact direct avec les touches capacitives 6. Il peut être relié à une borne de la pile ou rester dans un état flottant. Cet écran de blindage peut couvrir entièrement la seconde face de la plaque à circuit imprimé ou au moins une zone en regard de toutes les touches capacitives 6. Une grille au lieu d'une couche métallique pleine peut aussi être prévue comme écran de blindage.

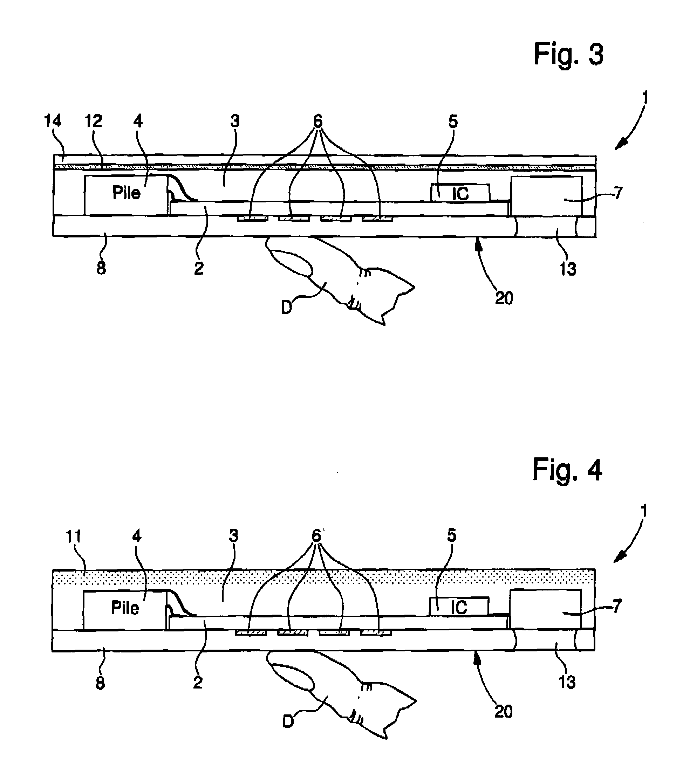

La figure 3 représente une coupe transversale d'une troisième forme d'exécution de la carte électronique 1 selon l'invention. Il est à noter que tous les mêmes éléments de la carte électronique 1 décrits ci-après portent des signes de référence identiques à ceux des figures 1 et 2. De ce fait par simplification, il ne sera pas répété en détail la description de chaque élément pour cette figure 3.

Comme pour la seconde forme d'exécution, la couche en matériau isolant comprend une première couche isolante 3 et une seconde couche isolante 8. La pile 4, le dispositif d'affichage 7, la plaque à circuit imprimé 2, le circuit intégré 5 et les électrodes des touches capacitives 6 sont en capsulées entre la première et la seconde couches isolantes.

Dans cette troisième forme d'exécution, la plaque à circuit imprimé 2, qui peut être flexible, est à double face. Sur une première face, au moins un circuit intégré 5 pour le traitement des signaux générés par les moyens de commande est connecté. Les pistes de connexion au dispositif d'affichage 7 peuvent également être prévues sur cette première face, ainsi que la connexion au moyen des deux brides métalliques aux bornes de la pile 4. Par contre, toutes les électrodes des touches capacitives 6 sont disposées sur une seconde face de la plaque à circuit imprimé 2, qui est opposée à la première face. Des passages conducteurs, non représentés, à travers la plaque à circuit imprimé 2 peuvent être prévus pour relier les électrodes des touches capacitives au circuit intégré.

Une ouverture 13 peut être pratiquée dans la seconde couche isolante 8 pour visionner une portion d'affichage du dispositif d'affichage 7. Toutefois en lieu et place de l'ouverture, il peut être prévu qu'une portion d'affichage du dispositif d'affichage 7 est visible à travers au moins une partie transparente 13 de la seconde couche isolante 8.

Comme les touches capacitives 6 se trouvent du côté de la seconde face de la plaque à circuit imprimé 2, la surface de contact 20 est cette fois-ci sur une face extérieure de la seconde couche isolante 8. Un écran de blindage 12 peut être réalisé sous la forme d'un film conducteur ou d'une couche de peinture conductrice opaque, qui peut définir également un décor pour la carte électronique. Cet écran de blindage est disposé sur la surface extérieure de la première couche isolante 3. Le film conducteur ou la couche de peinture s'étend au moins sur une zone en regard de toutes les touches capacitives 6, mais peut de préférence couvrir toute la surface extérieure de la première couche isolante 3. Un film transparent de protection 14 peut également recouvrir de manière conventionnelle complètement le film conducteur ou la couche de peinture sur toute la surface extérieure de la première couche isolante 3.

La figure 4 représente une coupe transversale d'une quatrième forme d'exécution de la carte électronique 1 selon l'invention. Il est à noter que tous les mêmes éléments de la carte électronique 1 décrits ci-après portent des signes de référence identiques à ceux des figures 1 à 3. De ce fait par simplification, il ne sera pas répété en détail la description de chaque élément pour cette figure 4.

Cette quatrième forme d'exécution de la carte électronique est sensiblement similaire à la troisième forme d'exécution de ladite carte. La seule différence de cette quatrième forme d'exécution par rapport à la troisième forme d'exécution concerne l'écran de blindage 11. Cet écran de blindage 11 de cette quatrième forme d'exécution, est constitué par des particules conductrices intégrées dans la matière de la première couche isolante 3. Ces particules conductrices sont intégrées dans une épaisseur déterminée dans la première couche isolante 3 depuis la surface extérieure. Ces particules sont intégrées pour couvrir au moins une zone en regard de toutes les touches capacitives 6, mais peut de préférence s'étendre sur une zone correspondant à toute la surface extérieure de la première couche isolante 3.

A partir de la description qui vient d'être faite, plusieurs variantes de réalisation de la carte électronique peuvent être conçues par l'homme du métier sans sortir du cadre de l'invention définie par les revendications. Il peut être prévu en lieu et place d'une pile ou batterie, de réaliser la source d'alimentation électrique au moyen d'une cellule solaire disposée de manière partiellement intégrée dans la carte électronique. Des plages de contact externe et/ou une piste magnétique peuvent être réalisées dans le cas où la carte électronique est du type carte bancaire pour une connexion notamment dans un appareil de lecture d'une banque ou d'un magasin. Il peut aussi être envisagé des moyens de transmission et réception de signaux sans fils, tels qu'un dispositif RFID intégré dans la carte. Selon la forme d'exécution prévue, le dispositif d'affichage peut être fixée sur la plaque à circuit imprimé.

## Revendications

1. Carte électronique (1) qui comprend au moins un circuit intégré (5) disposé sur une plaque à circuit imprimé (2), une source d'alimentation électrique (4) reliée à la plaque à circuit imprimé pour alimenter ledit circuit intégré, et des moyens de commande (6) actionnables manuellement et repliés au circuit intégré pour le traitement des signaux générés par les moyens de commande, ledit circuit intégré, les moyens de commande et la source d'alimentation étant enfermés ou encapsulés dans au moins une couche d'un matériau isolant (3) formant ladite carte, **caractérisée en ce que** les moyens de commande sont constitués d'un ensemble d'électrodes pour définir un écran tactile à touches capacitives activables chacune au moyen d'un doigt (D) d'un utilisateur ou d'un stylet posé sur une surface de contact (20) de la carte en regard d'au moins une touche tactile pour l'introduction d'une donnée ou d'une commande.

2. Carte électronique (1) selon la revendication 1, **caractérisée en ce que** la distance (e1) entre la surface de contact (20) et les touches tactiles (6) est inférieure à l'épaisseur (e2) du matériau isolant disposé d'un côté opposé à la surface de contact sur les touches tactiles de manière à permettre au circuit intégré de ne détecter la présence d'un doigt (D) ou d'un stylet qu'en contact sur la surface de contact en regard d'au moins une des touches tactiles à activer.

3. Carte électronique (1) selon l'une des revendications précédentes, **caractérisée en ce qu'**elle comprend un dispositif d'affichage (7) relié au circuit intégré (5) ou à un circuit d'entraînement relié audit circuit intégré, une portion d'affichage du dispositif d'affichage étant visible par une ouverture (13) pratiquée dans la couche en matériau isolant (3) ou dans la plaque à circuit imprimé (2).

4. Carte électronique (1) selon l'une des revendications 1 et 2, **caractérisée en ce qu'**elle comprend un dispositif d'affichage (7) relié au circuit intégré (5) ou à un circuit d'entraînement relié audit circuit intégré, une portion d'affichage du dispositif d'affichage étant visible à travers au moins une partie transparente (13) de la couche en matériau isolant (3) ou de la plaque à circuit imprimé (2).

5. Carte électronique (1) selon l'une des revendications précédentes, **caractérisée en ce qu'**elle comprend un organe de commande manuellement activable, qui est relié au circuit intégré et susceptible de commander la mise en fonction des touches tactiles et/ou du dispositif d'affichage (7).

6. Carte électronique (1) selon la revendication 5, **caractérisée en ce que** l'organe de commande est un bouton interrupteur, qui peut être pressé manuellement pendant une durée prédéterminée pour la mise en fonction des touches tactiles et/ou du dispositif d'affichage.

7. Carte électronique (1) selon l'une des revendications précédentes, **caractérisée en ce qu'**elle comprend un écran conducteur de blindage (10, 11, 12) disposé d'un côté des électrodes des touches capacitives (6), qui est opposé à la surface de contact (20), l'écran conducteur étant distant et sans contact avec les touches capacitives.

8. Carte électronique (1) selon l'une des revendications précédentes, **caractérisée en ce que** la couche en matériau isolant est constituée d'une première couche isolante (3) et d'une seconde couche isolante (8), la source d'alimentation, qui est une pile ou batterie (4), le dispositif d'affichage (7), la plaque à circuit imprimé (2), le circuit intégré (5) et les électrodes des touches capacitives (6) étant enfermés ou encapsulés entre la première et la seconde couches isolantes.

9. Carte électronique (1) selon la revendication 8, **caractérisée en ce que** la plaque à circuit imprimé (2) est flexible et simple face, **en ce que** le circuit intégré et les électrodes des touches capacitives (6) sont disposés sur une première face de la plaque à circuit imprimé en étant encapsulés dans la première couche isolante (3), la surface de contact (20) se trouvant sur la surface extérieure de la première couche isolante, et **en ce que** l'écran de blindage est constitué par un film conducteur (10) ou une grille conductrice disposé sur la seconde face de la plaque à circuit imprimé en regard d'au moins toutes les électrodes des touches capacitives, et enfermé dans la carte par la seconde couche isolante (8) fixée à la première couche isolante.

10. Carte électronique (1) selon la revendication 8, **caractérisée en ce que** la plaque à circuit imprimé (2) est flexible et double face, **en ce que** le circuit intégré (5) est disposé sur une première face de la plaque à circuit imprimé en étant encapsulé dans la première couche isolante (3), et **en ce que** les électrodes des touches capacitives (6) sont disposées sur une seconde face opposée de la plaque à circuit imprimé et enfermées dans la carte par la seconde couche isolante (8) fixée à la première couche isolante, la surface de contact (20) se trouvant sur la surface extérieure de la seconde couche isolante.

11. Carte électronique (1) selon la revendication 10, **caractérisée en ce que** l'écran conducteur de blindage est constitué par des particules conductrices (11) intégrées dans au moins une épaisseur déterminée de la première couche isolante (3) depuis la surface extérieure en s'étendant au moins sur une zone en regard de toutes les touches capacitives (6).

12. Carte électronique (1) selon la revendication 10, **caractérisée en ce que** l'écran conducteur de blindage est constitué par un film conducteur ou une couche de peinture conductrice opaque (12) disposé sur la surface extérieure de la première couche isolante (3), le film conducteur ou la couche de peinture s'étendant au moins sur une zone en regard de toutes les touches capacitives (6).

13. Carte électronique (1) selon l'une des revendications précédentes, **caractérisée en ce qu'**elle prend la forme d'une carte bancaire, dans laquelle il est prévu également une unité mémoire pour mémoriser des données personnelles et/ou au moins un code d'identification personnelle et/ou des paramètres de configuration, et une unité à microcontrôleur reliée à l'unité mémoire, et **en ce qu'**elle comprend 12 électrodes de touches capacitives (6) pour l'exécution chacune d'une fonction spécifique ou pour l'introduction d'une donnée définie en liaison au circuit intégré (5).
